# EUROPÄISCHE PATENTSCHRIFT

(11) **EP 0 691 152 B1**
(45) Veröffentlichungstag und Bekanntmachung des Hinweises auf die Patenterteilung: **20.01.1999**
(21) Anmeldenummer: 95810332.7
(22) Anmeldetag: 19.05.1995
(51) Int. Cl.: B01D 46/12

(54) **Luftfilter mit Filtertaschen**
Air filter with filter bags
Filtre à air avec des sacs filtrants

(30) Priorität: 04.07.1994 CH 2124/94
(43) Veröffentlichungstag der Anmeldung: 10.01.1996
(73) Patentinhaber: ZENTECO AG, CH-5430 Wettingen (CH)
(72) Erfinder: Ernst, Beat, CH-5430 Wettingen (CH)
(74) Vertreter: Luchs, Willi

(56) Entgegenhaltungen:
- DE-A- 2 449 330
- DE-U- 8 122 276
- DE-U- 8 308 859
- US-A- 3 138 443
- US-A- 4 193 780

## Beschreibung

Die Erfindung bezieht sich auf einen Luftfilter nach dem Oberbegriff des Patentanspruches 1.

Aus der DE-OS 2449330 ist ein Beutelfilter bekannt, bei dem die einströmseitig offenen Filterbeutel auf runden Stangen aufgehängt sind und die Beutelteile über den Stangen untereinander vernäht sind.

Aus der DE-U-83 08 859 ist eine Einrichtung zur Fixierung von Sack- oder Taschenfiltern bekannt, bei der U-förmige Einfassleisten das Filtermedium festklemmen. Die Taschendistanz wird durch Gummi- oder Schaumstoffstücke bestimmt, die auf einem Rahmen eingeklemmt werden. Die US-A-4193780 zeigt eine Filterkonstruktion mit V-förmigen Filterzellen. Im Querschnitt W-förmige Halter aus perforiertem Metall dienen zum losen Festhalten der Filterzellen. Diese Halter ragen in Ausschnitte einer Stabilisierungsstange hinein, welche den Halterabstand bestimmen. Zur Stabilisierung der Filteröffnung sind an den Filterstirnseiten dreieckförmige Bleche vorhanden.

Mit der Erfindung soll die Aufgabe gelöst werden, einen Luftfilter zu schaffen, der sich besonders preisgünstig herstellen lässt, der eine grosse Freiheit zulässt in der Wahl des gegenseitigen Abstandes der Haltestege im Hinblick auf die Abmessungen bestehender Filteranlagen und der eine rasche mechanisierte oder roboterisierte Montage ermöglicht.

Diese Aufgabe wird durch die im Kennzeichen des Anspruches 1 genannten Merkmale gelöst.

Dadurch ist es möglich die Haltestege aus relativ dünnwandigem und damit leichtem Material herzustellen, wobei solche Haltestege infolge der Faltstruktur einen hohen Biegewiderstand in Strömungsrichtung erhalten. Ausserdem ist es mit geringem Aufwand möglich die Teilung der Haltestege an bestehende Rahmengrössen anzupassen. Bei einer entsprechenden, insbesondere nichtmetallischen Materialwahl des Frontrahmens besteht zudem die Möglichkeit den gesamten Luftfilter - ohne dass eine Trennung der Filtertaschen vom Frontrahmen notwendig ist - in Verbrennungsanlagen zu verbrennen.

In der Zeichnung sind Ausführungsbeispiele des Erfindungsgegenstandes dargestellt und werden nachfolgend näher beschrieben. Es zeigen:
- Fig. 1: einen Vertikalschnitt durch den Luftfilter, mit verschiedenen Stadien der Befestigung der Filtertaschen durch Faltstege
- Fig. 2: eine perspektivische Darstellung eines Frontrahmenteiles mit Befestigungsmitteln der Falttaschen
- Fig. 3: eine Draufsicht auf eine erste Ausführungsform eines flachen Faltsteges vor der Faltung
- Fig. 4: einen Schnitt nach der Linie IV-IV in Fig. 5 des Faltsteges nach Fig. 3, nach einer ersten Faltoperation
- Fig. 5: eine Draufsicht auf den Faltsteg gemäss Fig. 3 nach einer ersten Faltoperation
- Fig. 6: einen Schnitt durch den Faltsteg nach der Linie VI-VI in Fig. 7 nach einer zweiten Faltoperation
- Fig. 7: eine Draufsicht auf den fertig gefalteten Faltsteg
- Fig. 8: eine Draufsicht auf ein Eckstück des Frontrahmens mit Falttasche und Faltsteg
- Fig. 9: eine Draufsicht auf eine Ausführungsform eines flachen Faltsteges vor der Faltung
- Fig. 10: eine Draufsicht auf ein Eckstück des Frontrahmens mit Faltsteg nach Fig. 9
- Fig. 11: einen Schnitt durch einen Faltsteg mit durchgezogenem Filtervlies

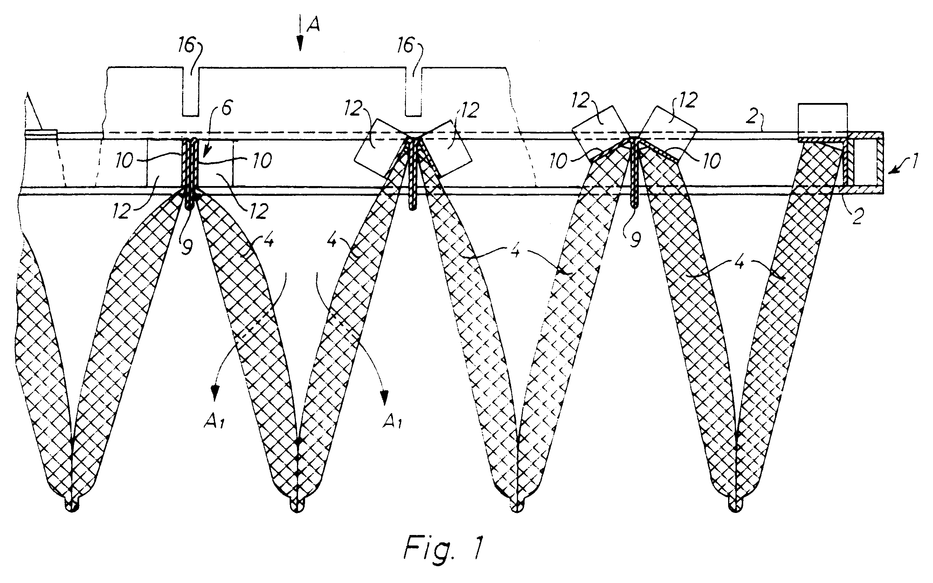

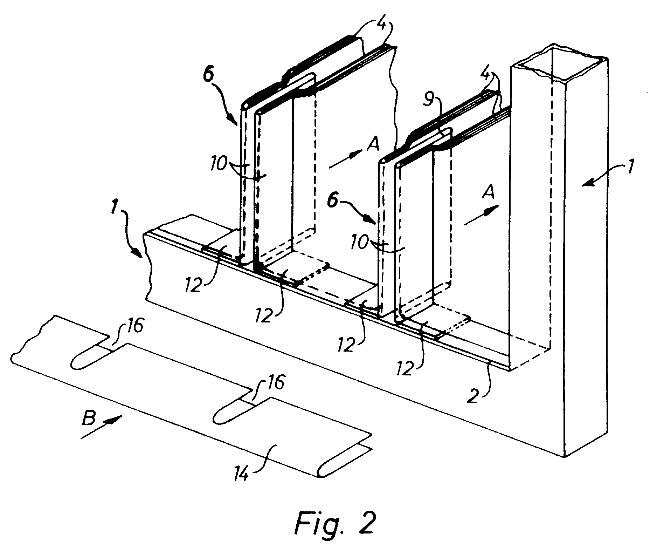

Der gewerbliche Luftfilter gemäss den Fig. 1 und 2 dient zur Abscheidung von Staub oder anderen Fremdkörpern aus einem Luftstrom oder allgemein aus einem Gasstrom. Der Filter - nachfolgend Luftfilter genannt - enthält einen quadratischen oder rechteckigen Frontrahmen 1 an dem Filtertaschen befestigt sind. Mehrere derartige Luftfilter lassen sich zu ganzen Filtereinheiten zusammenbauen.

Der Frontrahmen 1 besteht vorzugsweise aus zusammengeleimten Kartonstücken mit einem Kern aus Wellpappe, wobei der Querschnitt der Rahmenteile rechteckig oder quadratisch ist und die Rahmeninnenseite in der Regel je eine Anschlagschulter 2 aufweist. An diesem Frontrahmen 1 sind Filtertaschenteile 4 mittels Faltstegen 6 befestigt. Die Filtertaschen sind einströmseitig offen, sodass der Luftstrom in Richtung des Pfeiles A die im Querschnitt V-artigen Filtertaschen anströmt, die Filtertaschenteile 4 durchdringt und in gereinigter Form die Filtertaschen in Richtung der Pfeile A1 verlässt.

Die Faltstege 6 bestehen aus einem zusammenhängenden, relativ dünnen Materialstück, vorzugsweise aus Karton.

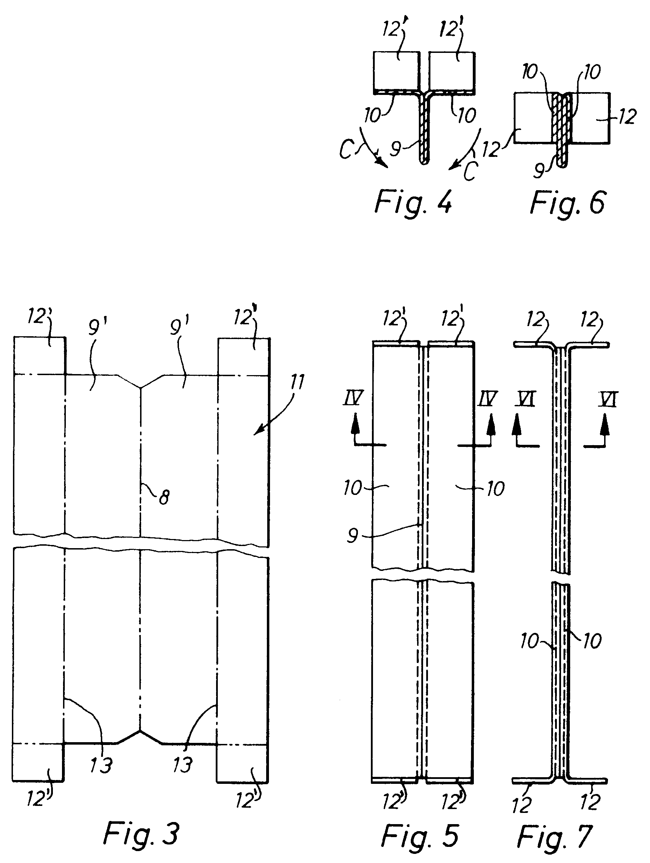

Die Form des flachen Zuschnittes 11, aus dem der Faltsteg 6 gebildet wird, geht aus Fig. 3 hervor. In einem ersten Faltvorgang wird der Zuschnitt 1 entlang der Mittellinie 8 und den Faltlinien 13 unter Bildung eines doppelten Mittelsteges 9, wobei die beiden Teilstücke 9' und 9'' gegeneinander anliegen, gefaltet, sodass ein Gebilde gemäss den Fig. 4 und 5 entsteht, wobei sich die beiden seitlichen Falbleg-Schenkel 10 vorerst quer zum Mittelteil 9 erstrecken. Die beiden Lappen 12' werden - ausgehend von der durch die Schenkel 10 gebildeten Ebene - je um 90° nach oben umgebogen. In einem anschliessenden Faltvorgang werden die beiden Schenkel 10 je in Richtung der Pfeile C gegen den Mittelteil 9 angeklappt. Dabei wird das Material der Filtertaschen 4 festgeklemmt, wie dies aus den verschiedenen Faltstadien von Fig. 1 hervorgeht. Durch die Schwenkbewegung der Schenkel 10 entstehen durch die mitverschwenkten Lappen 12' seitlich abragende Stützfüsse 12, wie dies aus den Fig. 6 und 7 ersichtlich ist. Diese Stützfüsse 12 bilden integrierende Teile des Faltsteges 6 und stützen sich auf der Innenseite des Frontrahmens 1 ab, wobei sie sich je vom Mittelteil 9 des Faltsteges 6 nach entgegengesetzten Seiten erstrecken. Der Mittelteil 9 ist - gemäss Fig. 6 - etwas länger als die beiden Schenkel 10. Die Verbindung der Filtertaschen 4 zwischen dem hochkant stehenden Mittelteil 9 und den beiden seitlichen Schenkel 10 erfolgt einerseits durch Klemmwirkung und zusätzlich durch Klebstoff oder Klammern.

Die Befestigung der Füsse 12 am Frontrahmen 1 erfolgt durch Klebstoff oder durch Klammern, wobei zwischen den benachbarten zickzack-förmigen Faltstegen 6 ein gegenseitiger Abstand eingehalten wird. Dieser gegenseitige Abstand kann entweder in der Weise vorgegeben werden, dass lose Zwischenstücke zwischen die Füsse 12 benachbarter Faltstege 6 oder zwischen benachbarte Schenkel 10 eingelegt und mit dem Frontrahmen 1 verbunden werden, oder indem die Länge der Füsse 12 so gewählt wird, dass sie im montierten Zustand stumpf gegeneinander stossen und dadurch den gegenseitigen Abstand der Faltstege 6 vorbestimmen.

Eine weitere Möglichkeit zur Einhaltung einer vorbestimmten Teilung der Faltstege 6 geht aus Fig. 2 hervor. Ein U-förmig gebogener Kamm 14 ist in vorbestimmten Abständen mit Schlitzen 16 versehen. Dieser Kamm 14 wird in Richtung des Pfeiles B über die Füsse 12 geschoben, wobei die Faltstege 6 in die Schlitze 16 eingreifen. Die ungeschlitzte Unterseite des Kammes 14 kommt dann auf die Innenseite des Frontrahmens 1 zum Aufliegen. Auch hier findet die Befestigung des Kammes 14 am Frontrahmen 1 durch Klebstoff oder Klammern statt. Durch Wahl des gegenseitigen Abstandes der Schlitze, also der Teilung, kann eine einfache Anpassung an bereits gegebene Frontrahmen-Grössen und Taschen-Anzahlen erfolgen, ohne dass aufwendige Werkzeuganpassungen notwendig sind.

Als Variante kann der Kamm 14 mit den Schlitzen 16 auch erst nachträglich in eine U-Form gebogen und über die Faltstege 6 gesteckt werden, wie dies aus Fig. 1 hervorgeht.

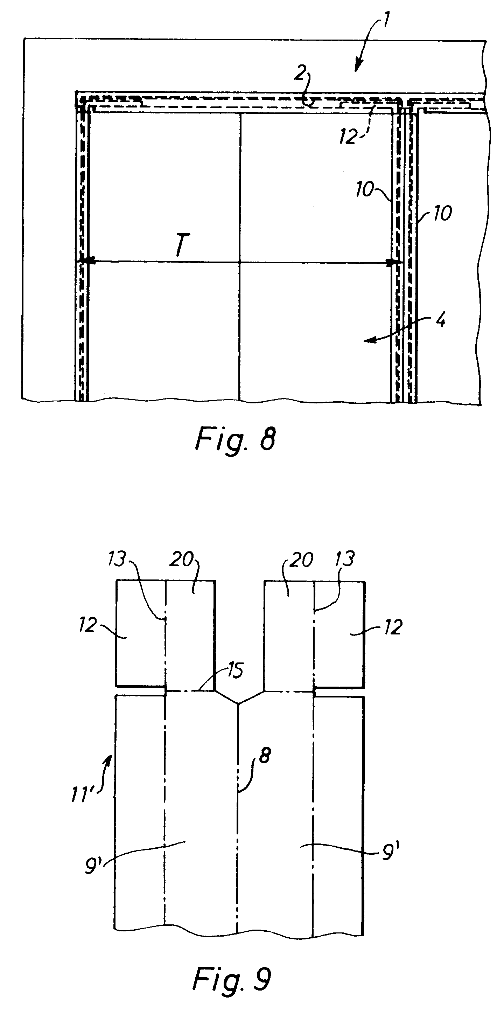

Aus Fig. 8 ist ersichtlich, dass das Filtervlies 4 an den Ecken umgebogen ist und sich auch über die Schmalseiten der Filtertaschen 4 erstreckt und somit eine allseitige Abdichtung bewirkt wird. Die Taschenbreite ist mit T bezeichnet und entspricht der Teilung.

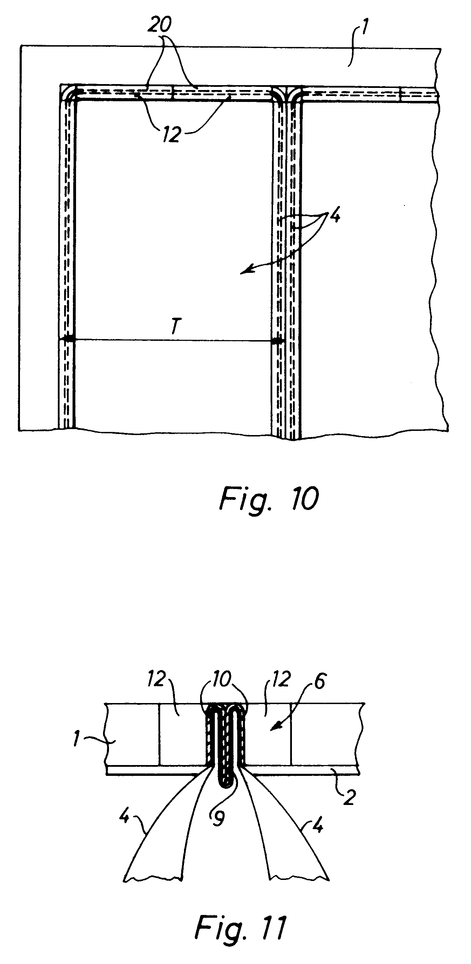

Fig. 9 zeigt eine Ausführungsvariante des Zuschnittes 11' für einen Faltsteg im flachen Zustand, analog zu Fig. 3. An Stelle von einfachen, die Füsse bildenden Lappen 12' sind bei der Ausführungsform nach Fig. 9 doppelwandige Umschlaglappen 12'', 20 vorhanden, die dadurch entstehen, dass eine Faltung je um die Achsen 13 und 15 erfolgt. Dabei lässt sich das Filtervlies 4 zwischen den Lappen 12'' und 20 festklemmen und durchgehend um die Ecke herumführen. Im fertig gefalteten Zustand nach Fig. 10 umschliessen somit die Füsse das Filtervlies auch auf der Filter-Schmalseite und füllen den Abstand zwischen zwei Faltstegen aus.

Die Länge der aus den Lappen 12'', 20, gebildeten Füssen wird zweckmässigerweise so gewählt, dass benachbarte Füsse stumpf gegeneinander stossen und dabei den Abstand der Faltstege 6 bestimmen.

Die Filtertaschen können aus einem Glas-, Kunststoff- oder Papiervlies bestehen, in Abhängigkeit des verlangten Reinheitsgrades und des Verwendungszweckes. Jede einzelne Filtertasche wird an ihren den Faltstegen 6 abgewandten Enden geschlossen, beispielsweise vernäht, verklebt oder verschweisst.

Die Form des Faltsteges erlaubt es auch, dass ein durchgehendes Filtervlies 4 ohne Schnitte direkt ab Rolle durchlaufend im Faltsteg 6 mitgefaltet wird. Das zusammenhängende Vlies 4 wird je um den Mittelsteg 9 der Faltstege 6 herumgeschlauft. Die Faltstege 6 lassen sich in frei wählbaren, gegenseitigen Abständen am Vlies befestigen und werden sodann vom Frontrahmen 1 abgestützt, wie dies aus Fig. 11 hervorgeht. Die seitliche Verschliessung der Taschen erfolgt anschliessend in einem weiteren Arbeitsgang.

Falls sowohl der Frontrahmen 1 als auch die Faltstege 6 aus einem harten Karton oder brennbarem, kartonähnlichem Material hergestellt werden, lässt sich ein solcher Luftfilter im gesättigten Zustand als Ganzes verbrennen, ohne dass eine Trennung der Filtertaschen vom Frontrahmen erfolgen muss und ohne dass metallische oder aus Kunststoff bestehende Bestandteile entfernt werden müssen.

## Patentansprüche

1. Luftfilter mit mehreren nebeneinander angeordneten, einströmseitig offenen Filtertaschen, die an untereinander parallelen Haltestegen befestigt sind, welche an ihren Enden von einem quadratischen oder rechteckigen Frontrahmen abgestützt sind, die Haltestege als zick-zack-förmige, hochkant stehende Faltstege (6) ausgebildet sind, zwischen deren Falten das Vlies von Filtertaschenteilen (4) festgehalten ist, dadurch gekennzeichnet, dass beidseits des doppelten Mittelsteges (9) des Faltsteges (6) die Filtertaschenteile (4) durch seitliche Faltsteg-Schenkel (10) festgeklemmt sind und an beiden Enden des Faltstegschenkels der Faltstege (6) quer zur Faltstegläugsrichtung verlaufende, mit dem Faltstegen einstückige Stützfüsse (12) zur Abstützung auf dem Frontrahmen (1) vorhanden sind.

2. Luftfilter nach Anspruch 1, dadurch gekennzeichnet, dass die Länge der Stützfüsse (12) den gegenseitigen Abstand der Faltstege (6) bestimmen.

3. Luftfilter nach den Ansprüchen 1 oder 2, dadurch gekennzeichnet, dass zwischen die Enden der Faltstege (6) ein mit Schlitzen (16) versehener Kamm (14) aufgesetzt ist, dessen Schlitzteilung den gegenseitigen Abstand der Faltstege (6) bestimmt und der Kamm (14) auf dem Frontrahmen (1) aufliegt.

4. Luftfilter nach einem der Ansprüche 1 bis 3, dadurch gekennzeichnet, dass das Vlies (4) als durchgehendes Band ausgebildet und in wählbaren Abständen mit mehreren Faltstegen (6) verbunden ist und das Vlies je um den Mittelsteg (9) der Faltstege (6) herum geführt ist.

5. Luftfilter nach einem der vorhergehenden Ansprüche, dadurch gekennzeichnet, dass der Frontrahmen (1) aus einem nicht-metallischen Material, insbesondere Karton, besteht.

6. Verfahren zur Herstellung eines Luftfilters gemäß einem der vorhergehenden Ansprüche mit einem Frontrahmen an dem Filtertaschen (4) befestigt werden, dadurch gekennzeichnet, dass das Filtermaterial einstückig über mehrere Filtertaschen (4) geführt und durch Stege (6) in vorbestimmten, gegenseitigen Abständen auf dem Frontrahmen (1) abgestützt werden und das Filtermaterial je über den Mittelsteg (9) der zick-zackförmig gefalteten Stege (6) geschlauft wird.

## Claims

1. A filter for a flowing gaseous medium having a plurality of adjacently located, to the flow of the gaseous medium open filter bags, which are fastened at parallel positioned supporting ribs, which are supported with their ends at a quadratic or rectangular frame element, the supporting ribs having zig-zag folded upright secured rib structures (6), between their ribs is secured the continuous wep of filter pockets (4), characterised in that the filter pockets (4) are clamped through lateral folded portions (10) at both sides of the double central rib (9) of the rib structures (6), and support legs (12) in one piece with the rib structures cross the longitudinal direction of the rib structure and are included on both ends of the folded portions of the rib structures (6) for the support of the frame element (1).

2. The filter according to claim 1, characterised in that the length of said support legs (12) is selected to determine the mutual spacing of said filter bags from each other.

3. The filter according to claim 1 or 2, characterised in that between the ends of the rib structures (6) a spacing comb (14) is received having slits (16) formed therein, which are spaced from each other by a distance determining the spacing of said rib structures (6), an said spacing comb (14) being engaged against the frame (1).

4. The filter according to one of the claims 1 to 3, characterised in that the continuous web (4) is arranged as a through-band and connected with several rib structures (6) in selectable distances, and that the continuous web (4) is looped around the central portion (9) of the rib structures (6).

5. The filter according to one of the preceding claims, characterised in that the frame (1) comprises a non-metallic material, especially cardboard.

6. Method for the manufacture of a filter according to one of the preceding claims, with a frame element supporting filter pockets (4), characterised in that the one-piece filter material is guided about several filter pockets (4) and is supported on the frame element (1) by rib structures (6) in predetermined mutual distances, and that the filter material is looped around the central portion (9) of the zig-zag folded rib structures (6).

## Revendications

1. Filtre à air, comportant plusieurs poches filtrantes disposées les unes à côté des autres, ouvertes côté entrée, qui sont fixées à des traverses d'arrêt parallèles les unes aux autres, qui en leurs extrémités sont soutenues par un cadre frontal carré ou rectangulaire, les traverses d'arrêt sont configurées comme des traverses pliantes (6), en zigzag et placées de chant, entre les plis desquelles est maintenu le tissu de parties (4) des poches filtrantes, caractérisé en ce que, des deux côtés de la traverse centrale double (9) de la traverse pliante (6), les parties (4) des poches filtrantes sont bloquées par des branches latérales (10) de traverses pliantes, et, en les deux extrémités de la branche des traverses pliantes (6), on a, pour appui sur le cadre frontal (1), des béquilles (12), formant une pièce unique avec la traverse pliante, et courant transversalement à la direction longitudinale des traverses pliantes.

2. Filtre à air selon la revendication 1, caractérisé en ce que la longueur des béquilles (12) définit la distance réciproque entre les traverses pliantes (6).

3. Filtre à air selon les revendications 1 ou 2, caractérisé en ce qu'entre les extrémités des traverses pliantes (6) est placé un peigne (14), pourvu de fentes (16), peigne dont le pas des fentes définit la distance réciproque entre les traverses pliantes (6), et le peigne (14) repose sur le cadre frontal (1).

4. Filtre à air selon l'une des revendications 1 à 3, caractérisé en ce que le tissu (4) est conçu comme une bande continue et, à des distances sélectionnables, est relié à plusieurs traverses pliantes (6), et le tissu passe autour de chaque traverse centrale (9) des traverses pliantes (6).

5. Filtre à air selon l'une des revendications précédentes, caractérisé en ce que le cadre frontal (1) est constitué d'un matériau non-métallique, en particulier le carton.

6. Procédé de fabrication d'un filtre à air selon l'une des revendications précédentes, comportant un cadre frontal auquel sont fixées des poches filtrantes (4), caractérisé en ce que le matériau filtrant est guidé en une seule pièce sur plusieurs poches filtrantes (4) et, grâce à des traverses (6), est soutenu à des distances réciproques prédéfinies sur le cadre frontal (1), et le matériau filtrant est passé en boucle sur la traverse centrale (9) de chacune des traverses (6) pliées en zigzag.
